# EUROPEAN PATENT APPLICATION

(11) **EP 2 561 916 A1**
(43) Date of publication of application: **27.02.2013**
(21) Application number: 11178592.9
(22) Date of filing: 24.08.2011
(51) Int. Cl.: B01D 53/02, C10K 1/20, C10K 1/32

(54) **Method for naphthalene removal**

(71) Applicant: Neste Oil Oyj, 02150 Espoo (FI)
(72) Inventor: Eilos, Isto, 06150 Porvoo (FI); Koskinen, Jukka, 02160 Espoo (FI); Lipiäinen, Kyösti, 06400 Porvoo (FI); Tiitta, Marja, 06150 Porvoo (FI); Toppinen, Sami, 00730 Helsinki (FI); Vuori, Heli, 02630 Espoo (FI); Österholm, Heidi, 06100 Porvoo (FI)
(74) Representative: Etuaho, Kirsikka Elina

(57) **Abstract**

The present description is related to the field of hydrocarbon production by gasification of carbonaceous material. More specifically it discloses a method for naphthalene removal from a gas using a solid adsorbent material comprising benzene for the removal. The removal can be applied to e.g. crude syngas main stream and/or carbon dioxide exhaust side stream. Preferably the adsorption to the adsorbent material is reversible so that the material can be reused and naphthalene and possibly benzene recovered after regeneration.

## Description

### Technical field

The present description is related to the field of hydrocarbon production by gasification of carbonaceous material. More specifically it discloses a method for naphthalene removal from synthesis gas produced by gasification. It also introduces a use of a group of adsorbent materials novel for this application. As a specific application, this process is utilized as a part of biomass to liquid (BTL) process.

### Background

In the production of hydrocarbon compositions, gasification of carbonaceous material can be utilized as the initial step. Syngas thereby obtained can be converted into hydrocarbons or derivatives thereof, by a synthesis reaction. The general reactions are known in the field. Especially, when gasifying biomass the raw material comprises, and produces as side reactions, impurities previously uncommon in the field. To optimize the yield and avoid irregularities in the refinement process, further process steps are required.

The gasification of carbonaceous material produces primarily carbon monoxide and hydrogen, thus syngas. Also carbon dioxide, water and different hydrocarbons are abundant side products in the gasification product. Depending on the source and composition of the carbonaceous raw material, traces and derivatives of other elements are typically present as impurities. Some impurities and side products are harmless, nearly inert in the process and require no attention. On the other hand, some side products are easily removed.

Aromatic compounds as gasification side products are neither harmless nor easily removed. The simplest aromatic compound, benzene, is an occupational health problem. It must be removed from the process as soon as possible to minimize the exposure of plant workers to this carcinogenic. Some commercial adsorbents for removal of benzene from this kind of gas compositions are known.

Another aromatic compound demanding removal at an early stage is naphthalene. It has physical tendency to solidify at low temperatures. Hence, as process stream is cooled at a stage, there is a risk of naphthalene freezing causing clogging and blocking of the process equipment. However, an efficient commercial adsorbent for naphthalene removal is not known.

When applying other methods, benzene and naphthalene have shown to be problematic components for raw gas purification section as they have high vapor pressure even in solid phase. These components, when in small quantities, flow through even cold washes and cause blocking problems at wash section and finally environmental problems at CO₂ purge from the process.

Patent publication GB 316948 discloses removal of nitrogen oxides, cyclic diolefines, and ketones from coke oven gas prior to low temperature cooling. This is effected by treatment with a substance which adsorbs these impurities and also promotes a catalytic action between them. Active carbon and silica gel are suitable adsorbents; they may be impregnated with metals or metal salts. Regeneration of the adsorbents is effected by heating in nitrogen. The coke oven gas is reported to undergo a preliminary removal of higher benzene hydrocarbons, hydrogen sulphide, carbon dioxide, and water. However, the method for said preliminary removal is not disclosed.

A prior art publication, US 2003126989, discloses a process for syngas purification, employing a bed of adsorbent(s) comprising an adsorbent based on a zeolite of NaLSX type, with Si/Al ranging from 0.9 to 1.1. It is considered advantageous compared with beds of adsorbents based on 4A or NaX zeolites, since it allows longer cycle times and therefore less frequent regenerations. When the syngas to be purified also contains heavy hydrocarbons as impurities, such as butanes, pentanes, etc., it is possible to use the NaLSX-based adsorbent by itself, but it is preferred, in the adsorption column, to add to the CO₂-selective NaLSX-based adsorbent one or more adsorbents capable of selectively adsorbing heavy hydrocarbons, such as for example aluminas, silica gels or active carbons, or zeolites. Aromatic hydrocarbons or specific challenges related to their removal are not addressed. Another publication from prior art, namely US 2006117952 continues with the same issue and similar solution. The method applies a NaLSX absorbent, wherein at least 70% of the exchangeable sites are occupied by sodium ions, is combined with another adsorbent, capable of selectively adsorbing each of other impurities except for CO₂ and H₂O, yet another adsorbent capable of selectively adsorbing H₂O; the adsorbents being either intimately mixed or in the form of separate beds in successive layers. The method further involves desorbing carbon dioxide and other impurities adsorbed on the adsorbents by increasing the temperature and/or reducing the pressure, and optionally recycling some of a first purified gas. Here again, the impurities present in the contaminated syngas were discussed generally.

Yet another publication, WO 2008068305, discloses a multistep process for producing a purified synthesis gas stream from a feed of contaminated synthesis gas comprising methanol washes and first and second solid adsorbents. As a first solid adsorbent, sulphur-impregnated activated carbon and/or activated carbon are mentioned removing metals and/or metal carbonyls. The second solid adsorbent comprises one or more metals or oxides of metals or combinations thereof, the metals preferably being selected from the group of Ag, Sn, Mo, Fe and Zn. An especially preferred solid adsorbent is ZnO, because of its good performance in COS content reducing. However, the removal of aromatic hydrocarbons is not discussed in this publication.

Publication CA 1041006 (A1) discloses a method for decreasing the naphthalene concentration in debenzolized light oil. Said method comprises pumping the primary light oil condensate and oil bled from a naphthalene scrubber or oil type final cooler to a level above the topmost additional tray in the top portion of the wash oil. No solid adsorbent material is employed for naphthalene removal.

Another method, disclosed in publication CN 101157871, combines the traditional rectification technique and freezing crystal technology: first naphthalene in the waste diesel is primarily concentrated by intermission rectification; then naphthalene in the fractioning rich in naphthalene can be separated by the freezing crystal technology; at last kettle fluid with less naphthalene, the lean naphthalene fraction and lean naphthalene oil are mixed so as to regenerate diesel. The content of naphthalene drops down from 3-4 percent to 0.5 percent. However, this technique exploiting the physical characteristics of naphthalene is not applicable to combined benzene and naphthalene removal.

There still is a need for an alternative method for removal of aromatic compounds from the process. Further, there is a need to remove naphthalene from said process before any step in which the temperature is lowered to a level causing naphthalene to precipitate. There also is a need for combined benzene and naphthalene removal. When removing benzene and naphthalene from the biomass gasification process, there is need to recover said chemicals to provide benzene and naphthalene of bio-origin. Yet, there is constant need to simplification and increase of the effectiveness of the overall process.

### Summary of the invention

The present inventors have found that a method involving solid adsorbents comprising benzene provides surprisingly good results for naphthalene removal. This removal can be implemented after gasification of carbonaceous biomass and before the temperature of the gas so produced reaches a temperature below which naphthalene no longer remains fluid. The inventors have also evidenced a synergistic function of these removal activities in a way that applying said removal acts in combination and in a set sequence, the results are even more convincing. Evidently the need for naphthalene removal or combined benzene and naphthalene removal exists in the main stream, but the method is equally applicable for side streams as well.

The process for benzene and naphthalene removal can be incorporated to any process where naphthalene or both benzene and naphthalene cause trouble or are otherwise undesirable. This process can even be applied to a process wherein there is a need to remove the naphthalene alone. If the beneficial effect of adsorbent function, when pre-exposed to benzene is desired to be exploited, the feed to first solid adsorbent can be enriched with a sufficient amount of benzene to provide the effect. After said naphthalene removal step, benzene can subsequently be removed, preferably immediately from exhaust of said naphthalene removal step. Accordingly, now is disclosed a novel method for naphthalene removal from gas, which is obtained by gasifying carbon containing raw material to produce a gas comprising carbon monoxide and hydrogen as main components, and at least naphthalene as impurity. The removal step is performed by contacting the gas to be purified with the first porous solid adsorbent material comprising benzene. As an embodiment of the invention, this method of naphthalene removal is applied to production of hydrocarbons or derivatives thereof.

### Brief description of the figures

Figure 1 is a mass spectrum as a function of time giving total benzene and naphthalene responses from an adsorption experiment using helium as carrier gas. It shows the difference in their adsorption and desorption dynamics.
Figure 2 is representation of a component analysis from the same adsorption experiment as in figure 1 showing concentrations of benzene, toluene and naphthalene as a function of time.
Figure 3 shows how an adsorbent material (silica gel) performed after multiple regenerations.
When using helium as carrier gas, the recovery was almost perfect, but in regenerations 6 and 7, with carbon dioxide as carrier gas the adsorption was considerably disturbed. However, when changing back to helium as carrier gas, the original adsorption level was almost recovered.
Figure 4 is another mass spectrum as a function of time giving total benzene and naphthalene responses from an adsorption experiment using helium as carrier gas, but with a feed poor in benzene. It shows the dependence of naphthalene adsorption on the presence of benzene.
Figure 5 illustrates adsorbent area (BET-area and micropore area) and pore size (BET-pore and mesopore) and acidity as a function of total carbon content (benzene + toluene + naphthalene).
Based on this figure, conclusions on the most efficient adsorbent characters can be drawn.
Figure 6 illustrates the correlation between naphthalene adsorbed and the adsorbent area (BET-area and micropore area) pore size (BET-pore and mesopore) and acidity. These adsorbent characteristics can be used as criteria for selection for the best adsorbent materials for naphthalene removal from gases.

### Detailed description of the invention

Herein is provided a novel method for naphthalene removal from a gas. With naphthalene removal is here referred to adsorption of naphthalene present in the gas stream to a solid adsorption material. When applying the method, at least 80 %, preferably at least 85% and most preferably at least 90 % of the naphthalene present in the feed is removed by the adsorbent material. Herein, naphthalene removal is also referred to as purification. Without being bound to a theory, it is believed that when applying adsorption materials that adsorb benzene, said adsorbed benzene forms a layer on the adsorbent surface dissolving naphthalene and thus facilitating the adsorption, and helping to bind the same to the surface. Benzene is believed to act as a mediator facilitating the naphthalene to first transfer from gas phase to benzene containing surface layer, and then to solid adsorbent. Therefore it is essential that the adsorption material comprises benzene.

The gas to be purified originates from gasification of carbonaceous raw material. Gasification produces, as the main stream syngas, a gas comprising carbon monoxide and hydrogen as main components. The gas obtained typically contains both benzene and naphthalene as impurities. To remove these benzene and naphthalene, the gas obtained from gasification is contacted with a first porous solid adsorbent material.

An obvious application is to purify crude syngas after gasification and filtering steps. Preferably, a catalytic reforming step is also implemented before the naphthalene removal by adsorption. Typically in such a stream, the benzene content varies between 200 and 2000 ppm and the naphthalene content between 10 and 300 ppm. The benzene to naphthalene ratio when contacting the gas with the first solid adsorbent is at least 1, preferably at least 2 and most preferably at least 5, to provide dissolution of naphthalene in benzene on adsorbent surface.

Thus, according to one embodiment of the present invention, the gas stream from which naphthalene is to be removed can be the stream directly obtained from gasifying the carbon containing raw material. Alternatively, said gas stream from which naphthalene is to be removed can be the stream obtained by first gasifying and then catalytically reforming said gas.

Yet, within the concept of the present invention, the gas can be treated with one or more trivial wash, scrubbing or filtration segments before contacting with the first solid adsorbent with proviso that the process conditions are being kept such that naphthalene remains in the gas phase. A man skilled in the art can derive the limits of these conditions from textbooks, e.g. phase diagrams, in the field. In general, however, considering the overall BTL (Biomass to Liquid)-processes, the temperature of the gas is generally kept above 50 °C, the only exception being physical absorption, e.g. methanol washes at temperatures below 0 °C.

However, the present method can equally be applied to remove naphthalene from side streams, wherein the components of the side stream are originally obtained from gasifying carbon containing raw material, but separated from the main stream. One example is carbon dioxide exhaust stream. As CO₂ stream is nearly free from other contaminants, increased adsorbent life time can be achieved by this embodiment.

As said, the gas to be purified is obtained by gasifying carbon containing raw material. In a specific embodiment, said raw material is of biomass origin, which provides products from renewable resources. When removing benzene and naphthalene from the biomass gasification process, the recovery provides naphthalene or both benzene and naphthalene of bio-origin, which are valuable where non-fossil chemicals or derivatives thereof are appreciated.

Among others, raw material of biomass origin comprises both benzene and naphthalene as impurities. Thus, it is beneficial to remove both benzene and naphthalene together.

In such a case, the gas to be purified already comprises the benzene which is needed to adsorb to the adsorbent surface. In the experimental part it has been shown that from such gas composition, benzene is adsorbed first and only after that, naphthalene. However, in this embodiment as well, the subsequent and/or further removal of benzene is preferred. Hence, according to this embodiment, the porous solid adsorbent material adsorbs benzene reversibly. Preferably, this applies to both first adsorbent material as well as second adsorbent material.

However, applying the method of the invention does not require both benzene and naphthalene to be inherently present in the same gas composition. In cases, where gas to be purified does not contain any benzene or enough benzene, addition of benzene prior to naphthalene removal is needed to ensure efficient adsorption of the naphthalene. One option is to add benzene to the gas stream to be purified upstream to the adsorbent. This can be accomplished designing inlet for benzene before adsorption unit, preferably immediately before the adsorption.

Yet another option for providing said first solid adsorbent material comprising benzene, is to pre-saturate the adsorption material with benzene. This can even be combined with addition of benzene to the gas stream as described above. In a feasible way, this can be designed so that the adsorbent unit comprising said pretreated adsorption material is installed as the first absorption material to the gas stream needing naphthalene removal. This kind of process design can routinely be applied by a man skilled in the art.

Preferably, the benzene either inherently present in the gas to be purified, added to it or used for pre-saturation of the adsorbent material, is removed downstream from the naphthalene adsorption unit. The benzene can be removed by any means known to a person skilled in the art. Adsorbent materials applicable for benzene removal only are known to a man skilled in the art. Respectively, relevant circulation of benzene from exhaust to feed is routine design for a man skilled in the art. Preferably this is performed using second porous solid adsorbent material suitable for benzene adsorption. It can consist of the same material as the first porous solid adsorbent material, which offers the advantage of interchanging said adsorbents providing material pre-saturated with benzene for naphthalene removal. Alternatively, the first and second porous solid adsorbent materials can comprise partly the same adsorbent materials.

Using same or similar materials provides the benefit that said materials are interchangeable and material already adsorbed benzene is readily applicable for naphthalene removal. In the embodiment, wherein adsorbent is pre-saturated with benzene, this is arranged by flexible process design.

However, said materials may also be different from one another. In the case where different adsorbent materials are used for naphthalene and benzene removal the experiments conducted give guidance for adsorbent selections. Preferable adsorbent materials for naphthalene removal comprise non-acidic mesoporous materials which should not be microporous. Suitable materials may be selected from aluminosilicates and silica gel. Preferable adsorption materials for benzene removal are microporous nonacidic adsorbents such as zeolites and activated carbon.

The adsorbent materials applicable to the present process comprise chemically variable range of solids. Materials now found interesting, have average pore size of 2-50 nm. In general, adsorbent materials now found suitable for naphthalene removal are best for combined naphthalene and benzene removal. Preferably the micro area of the solid adsorbent material used is less than 300 m²/g. Based on experiments conducted, the first solid adsorbent material can be selected from activated carbon, silica gel, molecular sieves, zeolites and aluminosilicates. As shown in the experimental part, the characteristics and strengths of adsorbent materials vary and provide solutions applicable to different conditions and aims. For example, silica gel as naphthalene adsorbent showed best regeneration characteristics, but at the same time, is vulnerable to high CO₂ content in the feed.

One group of suitable adsorbents can be characterized as containing silicon, oxygen and optionally aluminium. They have pore sizes above 2 nm. These adsorbent are easily regenerated repeatedly and chemically very stable. They do not contain any poisons or environmentally unacceptable components. It has been found to be beneficial, that the adsorbent structure falls within certain physical characteristics ranges.

The methods for measuring the average pore size in adsorbent materials are known to a man skilled in the art of hydrocarbon refining in general. Pore volume, pore diameter and micropore area are typically measured by N₂-physisorption (N₂ adsorption-desorption). Pore volume is obtained by N₂-physisortpion utilizing BET equation (Brunauer-Emmett-Teller, ASTM D 4641). Average pore diameter can be calculated from N₂-physisorption utilizing BET or BJH equation (Barrett-Joyner-Halenda ASTM D 4641). Micropore area can be defined by N₂-Physisorption utilizing t-Plot method.

The adsorption materials are packed in a reactor acting as an adsorption unit. In the process from gasification to further processing of the syngas purified from naphthalene or both naphthalene and benzene, the adsorption takes place in at least one adsorption unit. Preferably for a gas comprising both naphthalene and benzene, at least two adsorption units are applied, the first of which comprises first porous solid adsorbent material comprising benzene for removing naphthalene from the gas to be purified; and the second comprises second porous solid adsorbent material adsorbing mainly benzene. Presence of benzene increases naphthalene adsorption, so it is advantageous to place a naphthalene adsorption unit upstream to benzene adsorbent.

Preferably first and second units comprise essentially the same adsorbent material enabling the process equipment to be arranged in a way to an adsorbent unit previously acted as the second porous solid adsorbent material adsorbing benzene to be installed as the first adsorbent unit for the naphthalene adsorption. A man skilled in the art can easily compose other arrangements involving even larger number of units following the same logics, connecting several units as a series or by other arrangement, within the idea of the present description.

For some adsorbent materials, better performance is achieved if the gas entering the adsorbent unit is free from distracting compounds compromising their capacity. For silica gel as adsorbent material such distracting compounds include e.g. water H₂O, carbon dioxide CO₂ and hydrogen sulfide H₂S. These can be removed from the gas applying a wash step upstream to the adsorbent unit.

Preferably, said first solid adsorption material adsorbs naphthalene in a reversible way, i.e. it is possible to regenerate the adsorption material for reuse. When applying the present method in a way also including benzene removal, it is preferable, that the second porous solid adsorbent material adsorbs benzene reversibly. An obvious advantage with reversible adsorption is the cost efficiency obtained by reuse of the solid adsorbent material.

Depending on the adsorbent and the level of purity required, three procedures for regeneration thereof are known to a man skilled in the art. The most simple and cheapest method for regeneration is flash regeneration, wherein the adsorbent pressure is decreased. By employing vacuum in the last step, the aromatic compound concentration in the adsorbent can further be lowered.

It is known in adsorption technology that, after saturation of the adsorbent with one or more components, any such may be desorbed by reducing the partial pressure of that component in the atmosphere surrounding the adsorbent. As an example of the general idea, the use of a pressure differential cycle employing molecular sieve adsorbents is concisely disclosed in an article by Griesmer et al. Seierfive Adsorp'tinj, Petroleum Refiner. June 1960, Vol. 39, No. 6, page 126.

In conventional pressure differential cycles, the pressure reduction at the beginning of the desorption step is carried out in a variety of ways. For example, when the adsorption process has been carried out for the purpose of obtaining a pure effluent, and when adsorption has been conducted at super-atmospheric pressure, the saturated adsorbent may be merely vented to the atmosphere to desorb any unwanted adsorbed component. If it is desired to retain the adsorbed material, however, again in a super-atmospheric operation, the venting may be into a closed vessel, thereby permitting the recovery of the adsorbed material.

When higher purity is required, the regeneration can be performed by stripping the adsorbent with an inert gas. In stripping, the adsorbent pressure is lowered and thereafter the partial pressures of the gases to be removed are decreased by feeding inert gas to the reactor. A negative side of this regeneration system is the dilution of aromatic compound stream with the inert gas used.

For some cases hot regeneration is needed. This provides very high degree of purity for the gas to be purified and additionally aromatic compound concentration in the effluent gases. Preferably said regeneration of the solid adsorbent material can be performed by heating at a temperature of less or equal to 250 °C and ambient pressure. However, any pressure lower than that of the adsorption is possible, even vacuum.

As a specific embodiment of an overall process, the naphthalene removal can be applied in a production process for hydrocarbons or derivatives thereof from biomass raw material. The method then comprises the steps:
a. gasifying the biomass raw material in the presence of oxygen to produce a gas comprising carbon monoxide, carbon dioxide, hydrogen and hydrocarbons;
b. removing naphthalene from the gas obtained in step (a) by contacting said gas with a first porous solid adsorbent material comprising benzene;
c. adjusting the hydrogen to carbon monoxide ratio;
d. converting in a synthesis reactor at least a significant part of the carbon monoxide and hydrogen contained in the gas into a product selected from hydrocarbon composition and derivatives thereof; and
e. recovering the product hydrocarbon or derivative thereof.

This method produces hydrocarbons or derivatives thereof of biomass origin. The composition of the product gas depends on the biomass raw material resource. Wood, bark, cereals, straw, bagasse, etc. are all possible raw materials for biofuel production. For ethical reasons, non-food raw materials are preferred.

Typically, gasifying the biomass raw material for producing a syngas takes place in the presence of oxygen. Preferably, gasifying the raw material in the presence of oxygen is performed at a temperature of at least 1000 °C. At these conditions, biomass, such as lignocellulosic materials, will produce a gas containing carbon monoxide and hydrogen, thus the components of syngas, as well as carbon dioxide and water gas. Further it usually contains some hydrocarbons and impurities, such as sulphur and nitrogen derivatives and trace metals and derivatives thereof.

Optionally the gas obtained from gasification can be subjected to catalytic refining. Preferably said method further comprises at least one catalytic reforming step, preferably before naphthalene removal.

The exhaust from gasification or from catalytic refining is not optimal feed for synthesis reactors. The hydrogen to carbon monoxide ratio is low, typically from 0.5 to 1.0 after gasification and optional reformation, and therefore must be increased. Adjusting hydrogen to carbon monoxide ratio aims at raising said ratio to a value of at least 1.5, often near to 2. A man skilled in the art knows several approaches to change this ratio, for example Water Gas Shift either for sour gas or purified gas.

An example of the synthesis reaction producing hydrocarbons is Fisher-Tropsch-synthesis (FT). In the FT -reactor at least a part of the carbon monoxide and hydrogen contained in the gas is converted into a hydrocarbon composition comprising C₄-C₉₀ hydrocarbons, in other words, hydrocarbons having carbon numbers in the range of from 4 (included) to 90 (included). The products obtained in the Fischer-Tropsch reaction, said C₄-C₉₀ hydrocarbons, include distillates and hydroconverted products, e.g. fuels such as naphtha, kero and diesel, base oils and n-paraffins, light detergent feedstocks and wax.

The Fischer-Tropsch synthesis is preferably carried out at a temperature in the range from 125 to 350 °C, preferably from 200 to 260 °C. The pressure preferably ranges from 5 to 150 bar, more preferably from 5 to 80 bar absolute. In the Fischer-Tropsch synthesis especially more than 65 wt% of C₄-C₉₀ hydrocarbons, preferably more than 85 wt% C₄-C₉₀ hydrocarbons are formed. Depending on the catalyst and the conversion conditions, the amount of heavy wax C₂₀-C₉₀ hydrocarbons may be up to 60 wt%, sometimes up to 70 wt%, and sometimes even up till 85 wt%.

When applying to this method at least one step of benzene removal, benzene of bio-origin can be separated and further purified for release to chemical market or alternatively for reuse in this process. Removal of benzene also contributes to occupational safety. Incorporating at least one wash step increases the product purity and removes compounds distracting e.g. catalysts in process steps following said washes.

### Examples

### 1 ADSORPTION EXPERIMENTS

### 1.1 Experiment equipment

Adsorption experiments were conducted using equipment consisting of three tube reactors, of which the first in upstream was a flashback arrestor, second the bubbler of naphthalene/benzene mixture and the third housed the adsorbent of interest. The bypass routes and pressurizing aids needed for the flawless operation of equipment were arranged by piping, closings and three-way valves. All the surfaces of the equipment being in contact with hydrocarbons were thermosealed to avoid desublimation of naphthalene. The pressure of the experimental equipment was settled with a string-adjusted relief valve and the pressure could be monitored by local pressure gauges. Carrier and dilution gas were brought to the equipment, the flow of which was adjusted using mass flow instruments (Bronkhorst).

The composition of the outlet gas from the adsorbent was measured with a mass selective detector and two FIDs, to which the gas stream was lead using a valve system. The product gas composition was monitored with a mass-selective detector, which gave the gas component distribution. Similarly, the first FID (front detector) was used for monitoring the overall response. The second FID (hind detector) was used for measuring the product gas composition as its components by samples taken from the gas stream at regular intervals. The quantification of the components observed in all three detectors and the overall response were based on external calibration, wherein the calibration response was obtained from a commercial gas mixture (AGA).

### Conduct of the experiments

The adsorbent was loaded in a tube reactor with an outlet (1.00 mm) for gas flow. A screw held the adsorption material in place during the adsorption experiment. The adsorbent was centralized by the length of the reactor and layers of glass wool and glass powder were loaded upstream and downstream of the adsorbent to stabilize the flow.

The slowest steps of the adsorption experiment were the increase of the pressure and stabilizing the concentrations before initializing the adsorption phase. Prior to the adsorption phase, the composition of the gas fed to adsorbent was analyzed by its components and as total response. During the test run, samples for the separation column component analysis were taken regularly. Saturation of the adsorbent material was recognized by a sudden increase of the overall response. The adsorption phase was continued until the overall response returned to the original level, after which the feed of hydrocarbons was ceased by bypassing the bubbler of naphthalene/benzene mixture. Then, the adsorbent was rinsed with the carrier gas to remove traces of hydrocarbons before regeneration.

Regeneration was initialized by dropping the pressure of the system to the ambient, and then raising the temperature to 250 °C. The temperature was maintained in the set value and the experiment was continued until the amplitude of the overall response was lowered as close to the base line as possible. The adsorption capacity as a percentage in relation to the mass of an adsorption material was calculated from the overall response of the regeneration. The division of the hydrocarbons adsorbed was derived from the responses of the different components on the mass-selective detector.

### 1.2 Adsorption materials

Adsorption experiments were conducted testing commercially available materials as well as generally acknowledged adsorbents (activated carbon, silica gel and molecular sieves). Some tailored mesoporous materials were included in testing as well (Table 1). Essential physical characteristics for said materials were measured: BET-area [m²/g], microarea [m²/g], pore volume [cm³/g], mesopore diameter [Å], BET- pore diameter [Å], Zeolite pore size [Å] and acidity.

**Table 1.**

| Adsorbent | BET-area (m²/g) | Micropore area (m²/g) | Pore volume (cm³/g) | Mesopore diameter (Å) | BET pore diameter (Å) | Acidity µmol/g) |
|---|---|---|---|---|---|---|
| Commercial adsorbent 1 | 615 | 587 | 0.369 | 193 | 24 | low |
| Commercial adsorbent 2 | 465 | 364 | 0.358 | 77 | 31 | low |
| Commercial adsorbent 3 | 421 | 269 | 0.498 | 87 | 47 | 25 |
| Commercial adsorbent 4 | 301 | 31 | 0.900 | 40 | 119 | 534 |
| Tailored mesoporous 1 | 1130 | 0 | 0.990 | 26 | 35 | 62 |
| Tailored mesoporous 2 | 832 | 25 | 0.770 | 26 | 37 | 190 |
| Tailored mesoporous 3 | 650 | 123 | 1.250 | 60 | 80 | 25 |
| Tailored mesoporous 4 | 624 | 16 | 0.510 | 24 | 33 | 25 |
| Aluminiumsilicate | 465 | 0 | 0.760 | 38 | 65 | 353 |
| Molecular Sieve13X | 556 | 528 | 0.330 | 40 | 24 | low |
| Activated carbon | 1360 | 1264 | 0.695 | 31 | 21 | low |
| Silica gel | 722 | 139 | 0.427 | 35 | 24 | low |

### Experiment conditions

The pressure in the experiment equipment was raised to 8 bar and the temperature on the benzene/naphthalene was kept at ambient, 24 °C. The adsorbent temperature was set to 40 °C. The carrier gas stream through the hydrocarbon mixture and adsorbent was 2.0 dm³/h. The benzene concentration in the experiment conditions was 1.2-1.8 vol-% and the naphthalene concentration 0.001-0.003 vol-%. The adsorbent was loaded (40-200 mg) to the reactor to form a layer having height of at least 20 mm in the reactor tube having inner diameter of 4.0 mm. In the experiments conducted, use of the same average particle size of 75-150 µm as far as possible was ensured by grinding or sieving from other particle distributions. This was not possible for all the materials used as some of them were only available as very fine powders or 20-40 mesh particles (activated carbon).

In the preliminary experiments, helium was used as the carrier gas. The experiments were thereafter repeated using calibrating gas mimicking synthesis gas and sulfur containing synthesis gas obtained from gasification of biomass raw material in a gasification pilot-plant. Composition of the carrier gases are compiled in table 2.

**Table 2.**

| Carrier gas | CO Vol-% | CO₂ Vol-% | H₂ Vol-% | CH₄ Vol-% | N₂ Vol-% | H₂S ppm |
|---|---|---|---|---|---|---|
| Calibrating gas | 15.0 | 14.9 | 14.8 | 3.1 | 52.2 | - |
| Synthesis gas | 20.7 | 29.1 | 34.4 | 3.0 | 11.7 | 156 |

Small amounts of water (0.02 vol-% H₂O) and ammonia NH₃, as well as an ethylene peak appearing between carbon dioxide and water in the separation column were observed in the synthesis gas.

### 1.3 The different stages of the adsorption measurements

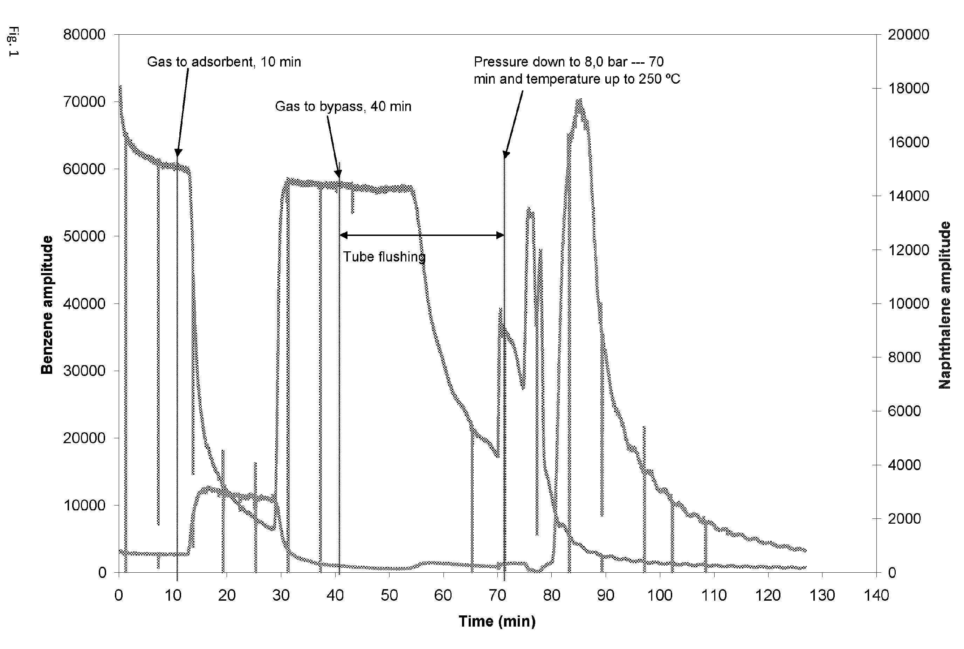

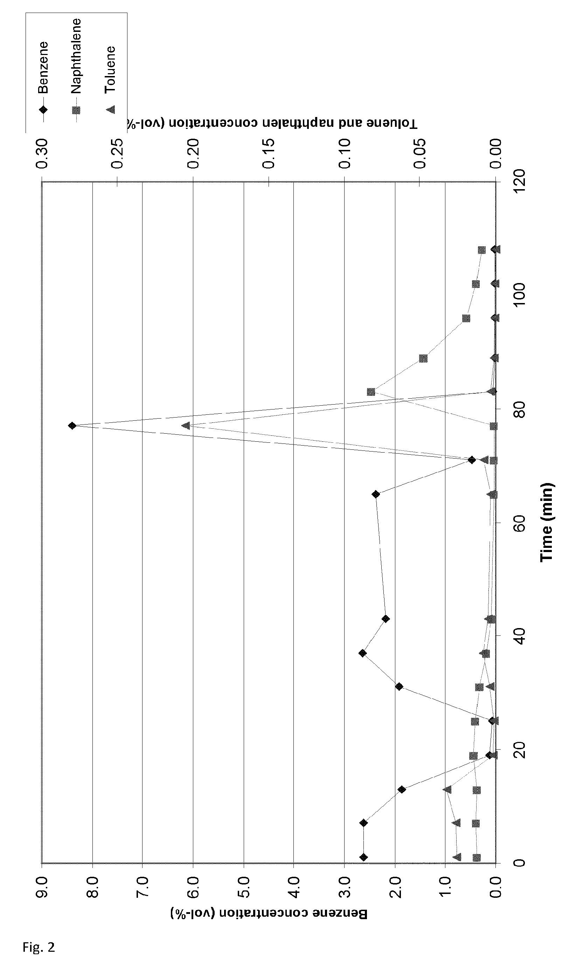

All the materials studied followed the same behavior as a function of time. Therefore a detailed disclosure of one experiment can be considered representative of all the experiments. The most relevant differences can be observed in speed of impregnation and saturation with hydrocarbons and the readiness for regeneration between the materials. Responses as a function of time are given in figures 1-2 using as a model material. The first of these figures, Figure 1, shows the benzene and naphthalene responses as a function of time. The second figure, Figure 2, presents a component analysis showing concentrations of benzene, toluene and naphthalene as a function of time.

All the measures (except the one reflecting low benzene concentration) showed an increase in the concentration of naphthalene simultaneously to the initiation of the benzene adsorption. Apparently, the withdrawal of benzene from the gas phase causes a change in partial pressures and consequently allows a larger amount of naphthalene to vaporize to the carrier gas.

This can be seen in Figure 1, wherein the response of naphthalene increased at point 23-25 min and a small delay in naphthalene adsorption could be seen in respect to the benzene adsorption. As the adsorbent was saturated with the hydrocarbons, benzene bypassed the adsorbent without being adsorbed, which was showed as the return of the benzene response to the original level. On the contrary, the adsorption of the naphthalene continued and the adsorbent was not saturated with naphthalene at any point of the experiment.

The continuous naphthalene adsorption could also be seen in the component analyses in figure 2.

The differences in the behavior of benzene and naphthalene were also evident during the regeneration of the adsorbent material. Benzene left the adsorbent material in a lower temperature, whereas naphthalene required a temperature nearly as high as 250 °C to desorb from the adsorbent. The regeneration was also affected by the amount adsorbed hydrocarbons. It was noted that a material which had adsorbed a considerable amount of naphthalene requires a longer time to return the signal to the base line.

### 2 RESULTS

### 2.1 Measurements with helium as carrier gas

In these experiments, experimental conditions were set up to compare the performance of different adsorbent materials, compare adsorption of different hydrocarbons, and study the dynamics of the naphthalene adsorption.

The adsorbents were aligned by the performance in the naphthalene removal. The values were collected from the component analyses at the initiation of the experiment and at the end of the adsorbing phase, just before the adsorbent mass was saturated with benzene. Activated carbon showed to be the best adsorbent for all hydrocarbons measured. The concentration of benzene in the carrier gas decreased from value of 15570 ppm to as low as 140 ppm, the toluene concentration from 103 ppm to 0.6 ppm and naphthalene from 34 ppm to 1.4 ppm. Other results are not shown here, but used for finding correlations between the adsorbent characteristics and performance in experiments.

The performance of all adsorbent materials in respect of the removal of molecules smaller than naphthalene was quite equal. Nevertheless, the adsorption of naphthalene showed more obvious differences between adsorbent material performances.

Considering the mass of adsorbent material used for the experiment and calculating a change in the concentration of hydrocarbons in relation to the mass of adsorbent material (1000 mg) in the experiment, another alignment was achieved. This alignment again is not shown, but used for correlation creation. The accuracy of these calculations has some weaknesses as the result obtained for some of the samples was obtained from the range of rapid change and on the other hand, none of the experiments was driven to the point of saturation with naphthalene. Based on the calculated results, Commercial absorbent 3 showed best performance under conditions of the experiment.

The adsorbents were also compared and aligned in the order of best adsorption of total hydrocarbons (benzene + toluene + naphthalene). Activated carbon, the best adsorbent, is in its own league for the adsorption of hydrocarbons, especially benzene. The amount of hydrocarbons adsorbed is calculated as the response of hydrocarbons released from the adsorbent material when subjected to regeneration conditions, at the temperature of 250 °C. In the case, where the adsorbent material binds the hydrocarbons to its structure so that regeneration is not complete, the calculated naphthalene amounts do not reflect the reality.

### 2.2 Measurements with sulfur free model gas as carrier gas

Sulfur free model gas as carrier gas was studied using as Commercial adsorbent 3, because it showed best results for both benzene and naphthalene and relative good results for total hydrocarbon adsorbing. Experimentally was found that when using the model gas, the percentage adsorbed was 10.3 w-%, which was slightly higher than that measured with helium (average from 4 measurements). The higher value was due to the presence in the model gas of hydrogen, which is flame gas for FID bringing about an increase in the detector signal. Calibration response was obtained with a hydrogen free hydrocarbon mixture. However, large molecules in the model gas shadowed the compounds having a response area overlapping that of the ionization area, thus rendering it impossible to measure the component distribution due to erroneous response relations. Even though the component distribution was not obtained, the results of this experiment show that the components of the model gas do not disturb the operation of the adsorbent. Thus, based on this experiment, naphthalene or naphthalene and benzene removal from synthesis gas using adsorption pattern as described here can be applied to after-gasification process.

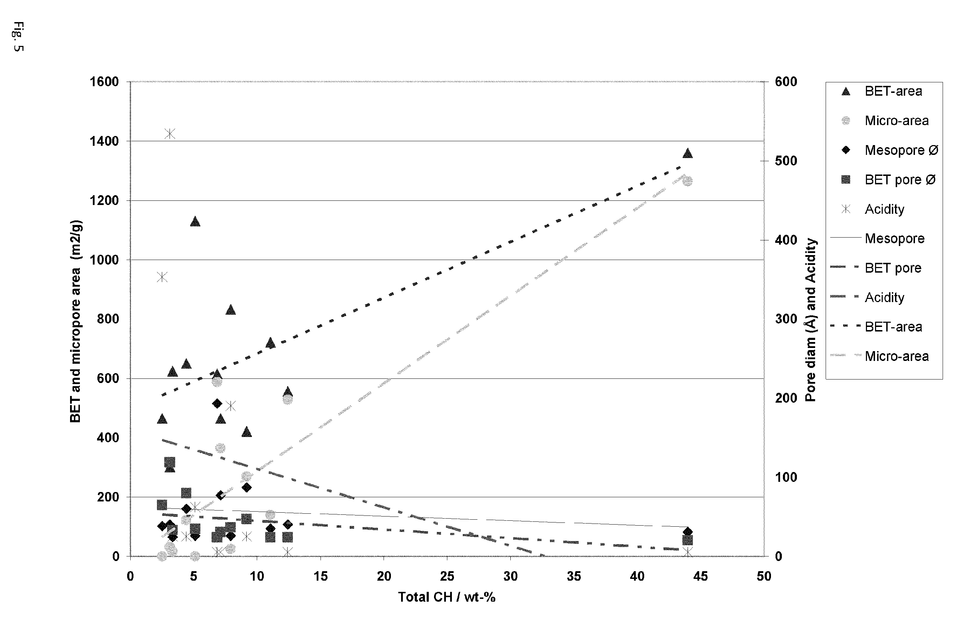

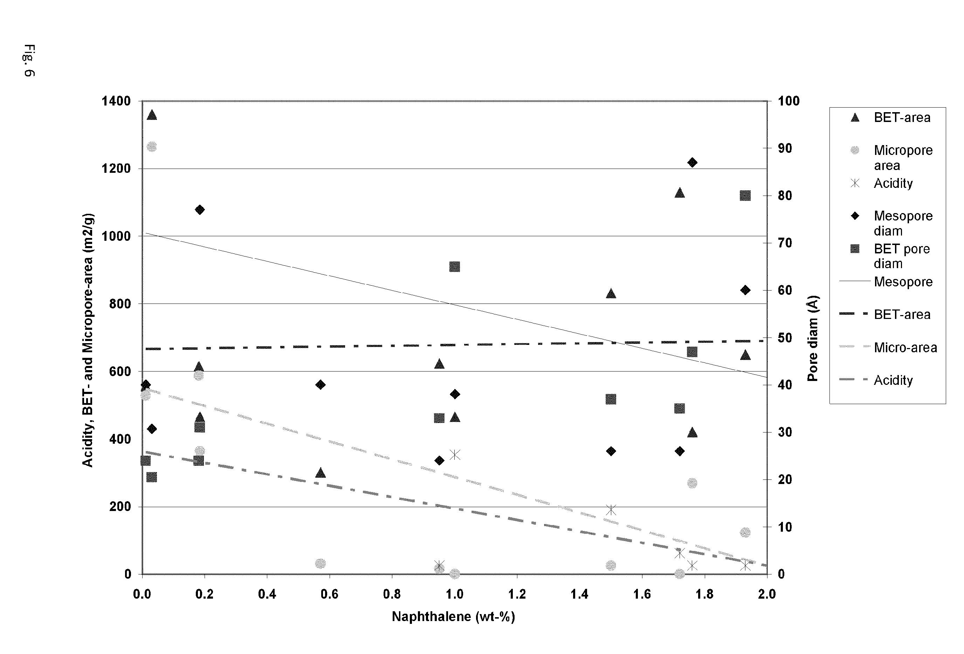

The most efficient and easily regenerated adsorbent for removing benzene and naphthalene from synthesis gas is silica gel. Presence of benzene on surface of adsorbent is beneficial for naphthalene adsorption. High concentration of carbon dioxide decreases adsorption capacity and even low concentration of water prevents totally removing of hydrocarbon contaminants from gas. According to correlation of measured physical values and adsorption capacity good adsorbent for removing benzene and toluene is an adsorbent material with a large surface area (BET and micro-area) and low acidity (Figure 5). Efficient adsorbent for naphthalene is material with large pore volume, low micro porosity and low acidity, preferably less than 30 (Figure 6).

### 2.3 Measurements with sulfur-containing synthesis gas as carrier gas

The effects of sulfur-containing synthesis gas as the carrier gas for adsorption were studied using silica gel as adsorbent material. Synthesis gas was obtained from gasification of biomass in a pilot plant. Adsorption capacity was lowered from 8.3 w-% obtained with helium as carrier to 6.2 w-% with sulfur containing synthesis gas as a carrier. Regeneration showed release of some H₂S, so silica gel adsorbs both hydrocarbon and sulfur compounds. Again, the component distribution was not reliable, as large molecules in the synthesis gas shadowed the compounds having a response area overlapping that of the ionization area. As a conclusion, sulfur compounds, especially hydrogen sulfide seem to disrupt the adsorption of naphthalene or naphthalene and benzene from gas stream. Therefore, removal of sulfur derivatives seems worthwhile before naphthalene or naphthalene and benzene removal when applying silica gel as adsorbent material in the process. Preferably removal of sulphur derivatives, thus acid gases is conducted using methods of chemical absorption, whereby the reaction conditions can be kept such that naphthalene remains in the gas phase.

### 2.4 Measurements with carbon dioxide as carrier gas

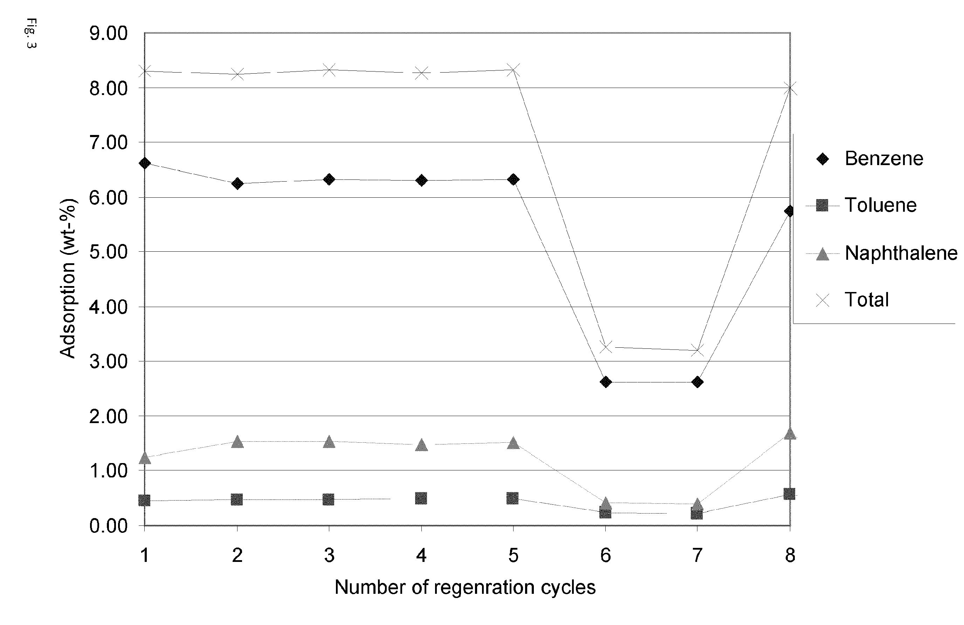

Carbon dioxide (100 %) as the carrier gas was studied using silica gel as the adsorbent material. The adsorption decreased essentially for all hydrocarbons (benzene, toluene and naphthalene). In figure 3, all the other experiments were conducted using helium as carrier, but 6 and 7, wherein carbon dioxide was used. When regenerating the adsorbent in the carbon dioxide stream, only about one third of the naphthalene bound to adsorbent material was released and removed. From this, it can be concluded that when using silica gel for removing hydrocarbons from CO₂, the heavy molecules probably accumulate on the adsorbent material if the regeneration takes place at a temperature lower than 250 °C. When regenerating silica gel in helium flow, the adsorbent capacity was almost completely recovered. This conclusion is only applicable to silica gel as adsorption material. Other adsorption materials could be more tolerable to carbon dioxide and even suitable for regeneration with CO₂.

By regenerating the silica gel in helium stream, the adsorption capacity was almost completely recovered (regeneration 8 in figure 3).

### 2.5 The effect of water on adsorption

When the carrier gas fed to adsorbent (both silica gel and Commercial absorbent 3 tested) contained small amount of water (0.2 vol-%, 8 bar, 50 °C) in addition to the hydrocarbons (benzene+toluene+naphthalene) the adsorbent lost all its purification capacity. During the adsorption phase, benzene was adsorbed on the adsorbent material, but the water and naphthalene concentrations in the carrier gas were even increased. The total amount of hydrocarbons adsorbed on the adsorbent material remained substantially the same as in helium flow, but the distribution was changed drastically. The amount of benzene retained on both the adsorbents fell to only one third of that in helium flow and the amount of the naphthalene multiplied to three-fold, but even though, the gas was not purified from hydrocarbons.

### 2.6 Naphthalene adsorption from gas poor in benzene

The experiments showed that the adsorption of benzene and naphthalene did not occur simultaneously. This is probably due to solvent effect by the lighter component, benzene. To asses this effect, the naphthalene adsorption was measured in conditions containing light hydrocarbons benzene and toluene as little as possible. Both aromatic solvent components were present in the carrier gas during the experiment. They originate either from naphthalene as impurity (grade >99, Merck) or they were eluted from the experiment equipment. The measurements were conducted for two different adsorbent materials.

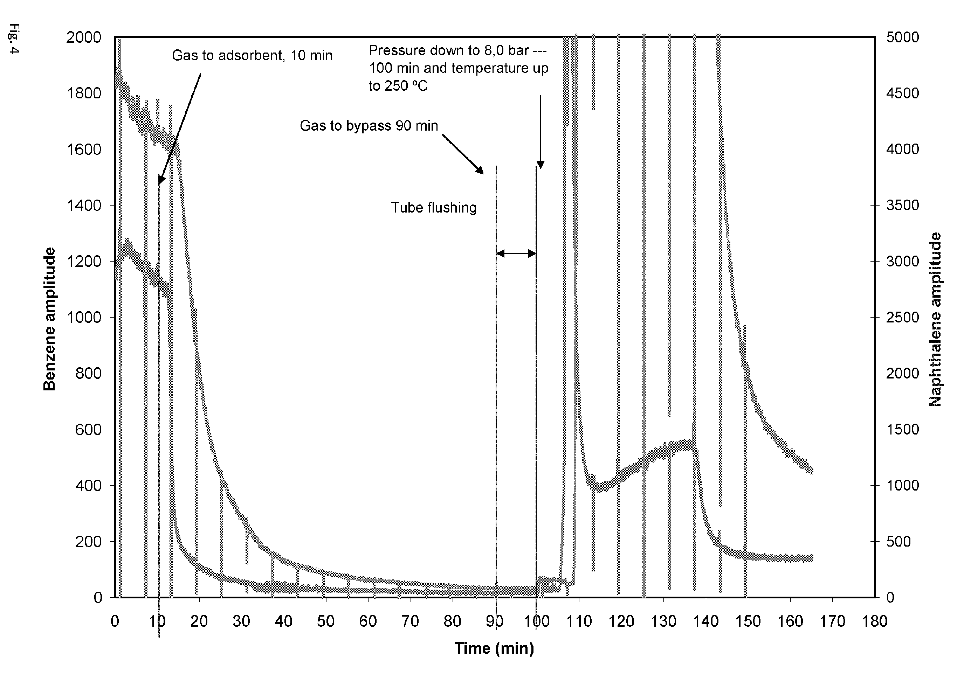

The mass spectrum responses showed the naphthalene adsorption to be slower than that of benzene (Figure 4). Both experiments confer the conclusion that the benzene adsorption occurring prior to naphthalene adsorption enhances the naphthalene binding (dissolution) to the adsorbent. Most probably, benzene forms a liquid film on the adsorbent surface facilitating the naphthalene dissolution and thus the dissolving effect enhances in collaboration with the adsorption forces the binding of the naphthalene into the adsorbent material. The amount of the naphthalene bound was thus increased in correlation to the length of the adsorption phase. When driven long enough, the adsorbent total hydrocarbon amount (benzene + naphthalene) approaches theoretical maximum. Apparently naphthalene is capable of substituting benzene in the adsorption sites on the surface of the material. It can thus be argued that the hydrocarbon adsorption is all about three different equilibriums, the equilibrium of the hydrocarbon partial pressures, dissolution balance and adsorption/desorption competition on the adsorption sites.

For naphthalene removal, it is essential to use a solid adsorbent material comprising benzene. Benzene contributes to naphthalene transfer and dissolution from gas phase to the adsorbent material and adsorption sites.

The dissimilarity between naphthalene and benzene was evident during regeneration, as the benzene was released from the adsorbent at a lower temperature and naphthalene only when the temperature approaches 250 °C.

### 3 REGENERATION OF THE ADSORPTION MATERIALS

The carbon content retained in the adsorption materials after the last regeneration step (He, 250 °C) was measured with TPD/TPO-MS- analyzator from a small sample of the adsorbent material of interest. The parameters compared were carbon content, the maximum temperature in the response profile, the character of the carbon (charcoal, soft/hard charcoal), the residual percentage and total residue (%). The results are not listed here, but used for correlation finding.

Based on the TPD and TPO analyses, silica gel contained less carbon after regeneration (2.7 %) and was thus easiest to regenerate. On the other hand, samples of both activated carbon and molecular sieve were the most difficult to regenerate and required a temperature of almost 500 °C for complete regeneration.

The carbon contained in the adsorption materials was in most of the cases suffered a coking reaction as their portion of "hard coke" revealed in the TPO-analyses was considerable large (94,6, 97,4, 73,9 ja 94,5 % respectively). In the coking reaction, the aromatic compounds have formed in oligomeration processes forming even larger multi-cyclic hydrocarbons containing only a petite amount of hydrogen, thus coke.

The readiness for regeneration in modest and reasonable conditions is important for industrial feasibility of these adsorption materials. Therefore, materials showing good regeneration results are most attractive as adsorption materials for syngas purification.

## Claims

1. A method for naphthalene removal from a gas stream,
a. gasifying carbon containing raw material to produce a gas stream comprising carbon monoxide and hydrogen as main components, and at least naphthalene as impurity;
b. contacting the gas stream from which naphthalene is to be removed with a first porous solid adsorbent material comprising benzene.

2. A method according to claim 1 wherein at least 80 %, preferably, at least 85% and most preferably at least 90 % of the naphthalene present in the feed is removed by the adsorbent material.

3. A method according to claim 1 wherein benzene is removed.

4. A method according to claim 5 wherein benzene is removed after naphthalene removal contacting the gas obtained from step (b) with a second porous solid adsorbent material.

5. A method according to claim 1 wherein the micro area of the solid adsorbent material used is less than 300 m²/g.

6. A method according to claim 1 wherein the solid adsorbent material has acidity of less than 30.

7. A method according to claim 1 wherein the first porous solid adsorbent material is selected from aluminosilicates and silicagel.

8. A method according to claim 4 wherein the second porous solid adsorbent material is selected from zeolites and activated carbon.

9. A method according to claim 1 or 4 wherein the porous solid adsorbent material adsorbs naphthalene reversibly.

10. A method according to claim 1 or 4 wherein the porous solid adsorbent material adsorbs benzene reversibly.

11. A method according to claim 1 wherein benzene is added to the gas stream to be purified upstream to the first adsorbent and/or the first adsorbent is pre-saturated with benzene prior to contacting it with said gas stream.

12. A method according to claim 1 further comprising regenerating the porous solid adsorbent material.

13. A method according to claim 1 wherein the solid adsorbent material is regenerated by heating at a temperature of less or equal to 250 °C.

14. A method according to claim 1 wherein the gas is obtained from gasification of biomass.

15. A method for producing hydrocarbons or derivatives thereof from biomass raw material, comprising steps of
a. gasifying the biomass raw material in the presence of oxygen to produce a gas comprising carbon monoxide, carbon dioxide, hydrogen and hydrocarbons;
b. removing naphthalene from the gas obtained in step (a) by contacting said gas with the first porous solid adsorbent material comprising benzene.
c. adjusting the hydrogen to carbon monoxide ratio;
d. converting in a synthesis reactor at least a significant part of the carbon monoxide and hydrogen contained in the gas into a product selected from hydrocarbon composition and derivatives thereof; and
e. recovering the product hydrocarbon or derivative thereof.

16. A method according to claim 15 further comprising at least one step of benzene removal.

17. A method according to claim 15 further comprising at least one wash step.

18. A method according to claim 15 further comprising at least one catalytic reforming step.
